# DEMANDE DE BREVET EUROPEEN

(11) **EP 1 271 276 A1**
(43) Date de publication de la demande: **02.01.2003**
(21) Numéro de dépôt: 02077451.9
(22) Date de dépôt: 20.06.2002
(51) Int. Cl.: G05G 9/047

(54) **Dispositif de commande d'un appareil électronique**

(30) Priorité: 26.06.2001 FR 0108421
(71) Demandeur: Koninklijke Philips Electronics N.V., 5621 BA Eindhoven (NL)
(72) Inventeur: Chanu, Frédéric, Société Civile S.P.I.D., 75008 Paris (FR)
(74) Mandataire: Kohn, Philippe

(57) **Abrégé**

L'invention propose un dispositif de commande d'un appareil électronique du type qui est constitué d'un organe de commande (60) qui comporte au moins deux zones supérieures latérales (62, 64, 66, 68) opposées de sélection sur lesquelles on peut appliquer un effort de commande et dont chacune est associée à un tronçon inférieur d'actionnement qui est susceptible de coopérer avec un organe (26) de déclenchement associé d'un commutateur (28) électrique,
caractérisé en ce que l'organe de commande (60) est réalisé en deux parties (80, 82) dont une première partie (80) supérieure porte au moins lesdites deux zones latérales (62, 64, 66, 68) de validation et dont une deuxième partie inférieure (82) porte au moins lesdits deux tronçons inférieurs d'actionnement et comporte un pion central (84) qui traverse verticalement la première partie (80).

## Description

L'invention propose un dispositif de commande d'un appareil électronique.

L'invention propose plus particulièrement un dispositif de commande d'un appareil électronique du type qui est constitué d'un organe de commande qui comporte au moins deux zones supérieures latérales opposées de sélection.

De manière générale les appareils électroniques tels les téléphones du type mobile ou les organiseurs sont constitués d'un boîtier dans lequel sont notamment agencés un clavier, un dispositif d'affichage, ainsi qu'un dispositif de commande du déplacement d'un curseur sur le dispositif d'affichage.

Le dispositif d'affichage fournit des informations alphanumériques qui peuvent être très variées, telles que des chiffres, des lettres mais aussi des pictogrammes, des dessins ou des images.

Il est fréquent que les dispositifs d'affichage des téléphones mobiles comportent des pictogrammes ou des caractères qui peuvent être des chiffres et/ou des lettres, répartis sur plusieurs lignes et plusieurs colonnes d'affichage et qui peuvent représenter le libellé d'une fonction du téléphone.

Les téléphones mobiles doivent comporter de plus en plus de fonctions. De façon à les gérer, il est connu d'utiliser des menus du type déroulant dont la complexité augmente avec le nombre de fonctions. La simplicité et la rapidité de la sélection de la fonction désirée est alors une caractéristique importante de l'ergonomie de l'appareil.

Il est alors nécessaire de pouvoir déplacer rapidement et facilement un curseur sur le dispositif d'affichage de façon à pouvoir le positionner sur chacun des caractères, ou sur, ou en vis-à-vis du libellé d'une fonction.

Ainsi le dispositif de commande peut par exemple permettre l'activation d'une fonction de sélection.

La fonction de sélection permet notamment la navigation d'un curseur sur l'écran de visualisation. La navigation peut consister à provoquer le déplacement du curseur sur l'écran. Elle peut aussi consister à provoquer le défilement sur l'écran d'une liste ou menu comportant l'intitulé d'au moins une partie des fonctions pouvant être exécutée par l'appareil électronique.

Le dispositif de commande permet aussi l'activation d'une fonction de validation de la fonction sélectionnée.

De façon connue, le dispositif de commande peut être constitué de deux touches.

Une première touche comporte au moins deux branches qui correspondent chacune à une direction de déplacement du curseur. Elle est montée basculante autour d'un axe transversal qui s'étend selon une direction sensiblement perpendiculaire à la direction d'alignement des deux branches.

Chaque branche comporte une zone supérieure de sélection sur laquelle on peut appliquer un effort de commande et une zone inférieure d'actionnement qui peut être réalisée sous la forme d'un doigt qui s'étend verticalement vers le bas et qui est susceptible de coopérer avec un organe de déclenchement associé d'un commutateur électrique.

Ainsi, lorsqu'un effort de sélection est exercé sur l'une des zones supérieures de sélection, la première touche bascule autour de l'axe transversal de façon que l'extrémité libre inférieure du doigt coopère avec l'organe de déclenchement associé et active une fonction correspondante, qui peut être la sélection d'une fonction dont l'intitulé est affiché sur l'écran.

La deuxième touche comporte de façon similaire à la première une zone supérieure de validation et une zone inférieure d'actionnement qui peut être réalisée sous la forme d'un doigt qui s'étend verticalement vers le bas et qui est susceptible de coopérer avec un organe de déclenchement associé d'un commutateur électrique. Elle est montée mobile en translation selon une direction verticale de validation.

Ainsi, lorsqu'un effort de sélection est exercé sur la zone supérieure de validation, la deuxième touche est translatée vers le bas de façon que l'extrémité libre inférieure du doigt coopère avec l'organe de déclenchement associé et active une fonction correspondante, qui peut être la validation de la fonction sélectionnée précédemment.

Cependant, un tel dispositif de commande est encombrant. En effet, il nécessite qu'un commutateur électrique soit associé à chaque direction de sélection ainsi qu'à la validation de la fonction sélectionnée.

De façon à réduire l'encombrement du dispositif de commande, il peut être constitué d'une première touche unique qui est similaire à celle décrite précédemment et qui, en plus, est montée mobile en translation selon une direction verticale de validation.

La sélection d'une fonction par la navigation du curseur est identique à la sélection décrit précédemment. La validation de la fonction sélectionnée consiste à appliquer un effort de commande vertical sur la paroi supérieure de la touche de façon à provoquer sa translation verticale vers le bas pour que toutes les zones inférieures d'actionnement coopèrent simultanément avec les organes de déclenchement des commutateurs électriques en vis-à-vis. Ainsi, l'actionnement simultané des organes de déclenchement permet de valider la fonction sélectionnée.

Un tel dispositif de commande présente un encombrement réduit. En effet, il ne nécessite que le même nombre de commutateurs qu'il y a de directions de sélection. La fonction supplémentaire de validation de la fonction sélectionnée étant réalisée par l'actionnement simultané des commutateurs associés à chaque direction de sélection. Cependant, est très difficile voire impossible à mettre en oeuvre de façon fiable.

Lors de la validation, il est fréquent que l'effort de commande soit décalé ou excentré par rapport au centre du dispositif de commande. Dans ce cas, lors de la translation verticale, le dispositif de commande bascule légèrement ce qui produit un léger décalage entre les instants de coopération de chaque tronçon inférieur avec l'organe de déclenchement associé. Ainsi, au lieu de valider la fonction sélectionnée, l'application de l'effort de validation va provoquer la sélection involontaire d'une autre fonction.

Un tel manque de fiabilité de fonctionnement est inacceptable.

De façon à fournir une solution à ce problème, l'invention propose un dispositif de commande d'un appareil électronique du type qui est constitué d'un organe de commande qui comporte au moins deux zones supérieures latérales opposées de sélection sur lesquelles on peut appliquer un effort de commande et dont chacune est associée à un tronçon inférieur d'actionnement qui est susceptible de coopérer avec un organe de déclenchement associé d'un commutateur électrique, du type dans lequel l'organe de commande est monté basculant autour d'un axe de sélection qui s'étend selon une direction perpendiculaire à la direction d'alignement des deux commutateurs, entre une position intermédiaire de repos et deux positions opposées de sélection, lorsqu'un effort est appliqué sur l'une ou l'autre des zones supérieures de sélection, de façon que le tronçon inférieur d'actionnement correspondant coopère avec l'organe de déclenchement associé et active une première ou une deuxième fonction de sélection, et du type dans lequel l'organe de commande est monté mobile en translation selon une direction verticale de validation orthogonale à la direction d'alignement et à l'axe de sélection, entre la position de repos et une position enfoncée, lorsqu'un effort de validation est appliqué sur une troisième zone centrale de validation de l'organe de commande, dans laquelle les deux tronçons inférieurs opposés d'actionnement coopèrent simultanément avec les deux organes de déclenchement associés de façon à activer une fonction de validation de l'appareil,
caractérisé en ce que l'organe de commande est réalisé en deux parties dont une première partie supérieure porte au moins lesdites deux zones latérales de validation et dont une deuxième partie inférieure porte au moins lesdits deux tronçons inférieurs d'actionnement et comporte un pion central qui traverse verticalement la première partie et dont la face supérieure d'extrémité libre constitue la troisième zone centrale de validation.

Selon d'autres caractéristiques de l'invention :
- la première partie comporte quatre zones latérales de sélection qui sont réparties angulairement à 90° autour de la zone centrale de validation et dont chacune est associée à un tronçon inférieur, et les quatre tronçons inférieurs sont portés par la deuxième partie, de façon que, lorsqu'un effort de validation est appliqué à la zone centrale de validation, les quatre tronçons inférieurs coopèrent simultanément avec les organes de déclenchement associés pour activer la fonction de validation ;
- la première partie comporte quatre zones latérales de sélection qui sont réparties angulairement à 90° autour de la zone centrale de validation et dont chacune est associée à un tronçon inférieur, et les deux tronçons inférieurs opposés sont portés par la deuxième partie, les deux autres tronçons inférieurs opposés étant portés par la face inférieure de la première partie, de façon que, lorsqu'un effort de validation est appliqué à la zone centrale de validation, les deux tronçons inférieurs portés par la deuxième partie coopèrent simultanément avec les organes de déclenchement associés pour activer la fonction de validation ;
- le dispositif de commande comporte des moyens de rappel élastique des deux parties contre des butées supérieures qui définissent leurs positions de repos ;
- la butée supérieure de la deuxième partie est une surface inférieure de la première partie ;
- les moyens de rappel élastique appartiennent aux commutateurs électriques associés ;
- le dispositif de commande comporte des moyens de guidage en translation verticale de la deuxième partie de façon à favoriser la coopération simultanée des tronçons d'actionnement qu'elle porte avec les organes de déclenchement associés, lorsque la zone centrale est commandée.

L'invention propose aussi un appareil électronique qui comporte un organe de commande selon l'une quelconque des revendications précédentes, caractérisé en ce qu'il consiste en un téléphone mobile de type GSM.

D'autres caractéristiques et avantages de l'invention apparaîtront à la lecture de la description détaillée qui suit pour la compréhension de laquelle on reportera aux figures annexées parmi lesquelles :
- la figure 1 est une vue en perspective d'un appareil électronique réalisé selon l'état de la technique ;
- la figure 2 est une vue en perspective éclatée vue de dessus, notamment des parties constituant un organe de commande réalisé selon un premier mode de réalisation de l'invention ;
- la figure 3 est une vue en perspective vue de dessous de l'organe de commande réalisé selon le premier mode de réalisation de l'invention ;
- la figure 4A est une vue en perspective assemblée des parties l'organe de commande réalisé selon le premier mode de réalisation de l'invention, en position de repos ;
- la figure 4B est une vue en section de l'organe de commande selon la ligne 4B-4B représenté à la figure 4A ;
- la figure 4C est une vue en section de l'organe de commande selon la ligne 4C-4C représenté à la figure 4A ;
- la figure 5A est une vue en perspective en perspective assemblée des parties de l'organe de commande sur une zone de sélection de l'une desquelles un effort de commande est appliqué ;
- la figure 5B est une vue en section de l'organe de commande selon la ligne 5B-5B représenté à la figure 5A ;
- la figure 6A est une vue en perspective en perspective assemblée des parties de l'organe de commande sur une autre zone de sélection de l'une desquelles un effort de commande est appliqué ;
- la figure 6B est une vue en section de l'organe de commande selon la ligne 6B-6B représenté à la figure 6A ;
- la figure 7 est une vue en section transversale de l'organe de commande selon une variante de réalisation ;
- la figure 8 est une vue en perspective d'un organe de commande réalisé selon un deuxième mode de réalisation de l'invention ;
- la figure 9 est une vue en perspective éclatée de l'organe de commande réalisé selon le deuxième mode de réalisation de l'invention ;
- la figure 10 est une vue en perspective éclatée d'un organe de commande réalisé selon un troisième mode de réalisation de l'invention.

Dans la suite de la description et les revendications, une orientation supérieure, inférieure sera utilisée, à titre non limitatif, conformément à l'orientation de haut en bas des figures.

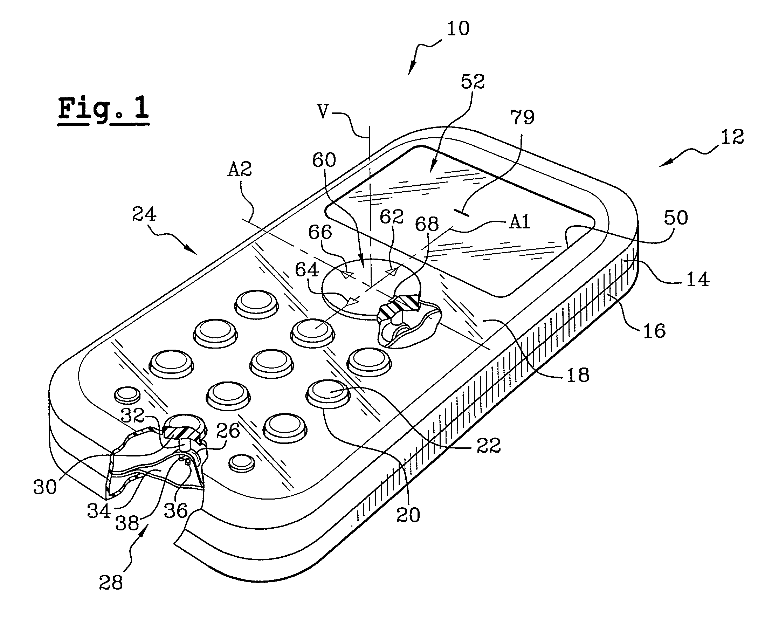

La figure 1 représente un appareil électronique 10 qui est ici, à titre d'exemple, un téléphone mobile de type GSM. L'appareil électronique 10 peut aussi être un organiseur, un dispositif de commande de jeux, un "PDA" (Personal Digital Assistant ou Assistant Numérique Personnel).

Le téléphone 10 comporte un boîtier 12 constitué d'une coque supérieure 14 et d'une coque inférieure 16.

La face supérieure 18 de la coque supérieure 14 comporte des orifices 20 qui permettent le passage de touches 22 d'un clavier 24 du téléphone 10. Les touches 22 sont mobiles verticalement entre une position de repos et une position d'actionnement dans laquelle chacune coopère avec un organe de déclenchement 26 d'un commutateur 28 électrique associé.

Le clavier 24 est ici constitué de douze touches 22 qui sont réparties en quatre séries horizontales de trois touches chacune.

Les touches 22 sont principalement constituées d'une partie supérieure 30 de commande sur laquelle un doigt de l'utilisateur peut appliquer un effort de commande. La partie 30 forme le dos de la touche correspondante.

Les touches 22 sont aussi constituées d'une partie inférieure rigide d'actionnement 32 qui est susceptible de coopérer avec l'organe de déclenchement 26 du commutateur 28 électrique associé. La partie inférieure rigide d'actionnement 32 est réalisée sous la forme d'une tige centrale qui s'étend verticalement depuis la face inférieure du dos de la partie 30 supérieure de la touche 22 correspondante, jusqu'à la paroi supérieure de l'organe de déclenchement 26 du commutateur 28 électrique associé, qui est par exemple un dôme déformable élastiquement.

Chaque commutateur 28 électrique est principalement constitué de deux pistes métalliques 36 qui appartiennent à un circuit électrique de commande associé qui ne sont pas reliées électriquement entre elles lorsque la touche 22 associée est en position de repos.

Lorsque la touche 22 est en position d'actionnement, la partie inférieure 32 déforme le dôme 26 de façon qu'une partie conductrice électriquement 38 de sa face inférieure vienne en contact avec les deux pistes métalliques 36, modifiant ainsi l'état électrique du circuit électrique de commande associé de façon à commander une fonction de l'appareil électronique 10.

La fonction peut par exemple consister à prendre la ligne téléphonique, à composer un chiffre du numéro à joindre, à déplacer un curseur dans le dispositif d'affichage 52 ou à valider une opération réalisée précédemment.

En général, les parties 30 supérieures et les parties 32 inférieures sont réalisées en une seule pièce par injection d'un matériau rigide, tel que du plastique.

Les pistes métalliques, non représentées, des commutateurs 28 sont fixées, par exemple par métallisation, sur un élément de support commun 34 qui s'étend dans un plan sensiblement horizontal et qui peut être un film de plastique. Les pistes appartiennent par exemple à la face supérieure d'une plaque à circuits imprimés.

La coque supérieure 14 du boîtier 12 de l'appareil électronique 10 comporte aussi une fenêtre 50 qui est traversée par un dispositif d'affichage 52, tel qu'un dispositif d'affichage à cristaux liquides, qui est ici sensiblement rectangulaire.

De façon à faciliter la commande de certaines fonctions, notamment des fonctions de sélection et de validation, il est connu de mettre en oeuvre un dispositif de commande qui est constitué par un organe de commande 60 dont la structure et le fonctionnement sans similaire à ceux des touches 22.

L'organe de commande 60 comporte quatre zones supérieures latérales opposées de sélection 62, 64, 66 et 68 sur lesquelles on peut appliquer un effort de commande et dont chacune est associée à un tronçon inférieur d'actionnement 72, 74, 76 et 78 qui est susceptible de coopérer avec un organe de déclenchement associé d'un commutateur électrique.

L'organe de commande 60 est ici de forme globalement annulaire. Il est monté basculant autour de deux axes de sélection A1, A2 qui s'étendent selon une direction perpendiculaire à la direction d'alignement de deux commutateurs opposés. L'organe de commande 60 est ainsi mobile entre une position intermédiaire de repos et deux positions opposées de sélection pour chaque axe de sélection A1, A2.

L'application d'un effort de commande sur chacune des zones supérieures de sélection 62, 64, 66 et 68, permet que le tronçon inférieur d'actionnement 72, 74, 76 et 78 correspondant coopère avec l'organe de déclenchement associé et active une fonction de sélection.

Ici, conformément à la figure 1, la fonction de sélection permet de déplacer le curseur 79 vers l'arrière, vers l'avant, vers la gauche ou vers la droite sur l'écran 52, en fonction de la zone supérieure de sélection 62, 64, 66 et 68 sur laquelle l'effort de commande est appliqué de façon que l'utilisateur puisse choisir la fonction qu'il désire sélectionner.

L'organe de commande 60 est aussi monté mobile en translation selon une direction verticale de validation V qui est orthogonale aux directions d'alignement et aux axes A1 et A2 de sélection, entre la position de repos et une position enfoncée. Lorsqu'un effort de validation est appliqué sur la zone centrale 70 de validation de l'organe de commande 60, lors de laquelle les quatre tronçons inférieurs d'actionnement 72, 74, 76 et 78 coopèrent simultanément avec les organes de déclenchement associés de façon à activer une fonction de validation de l'appareil.

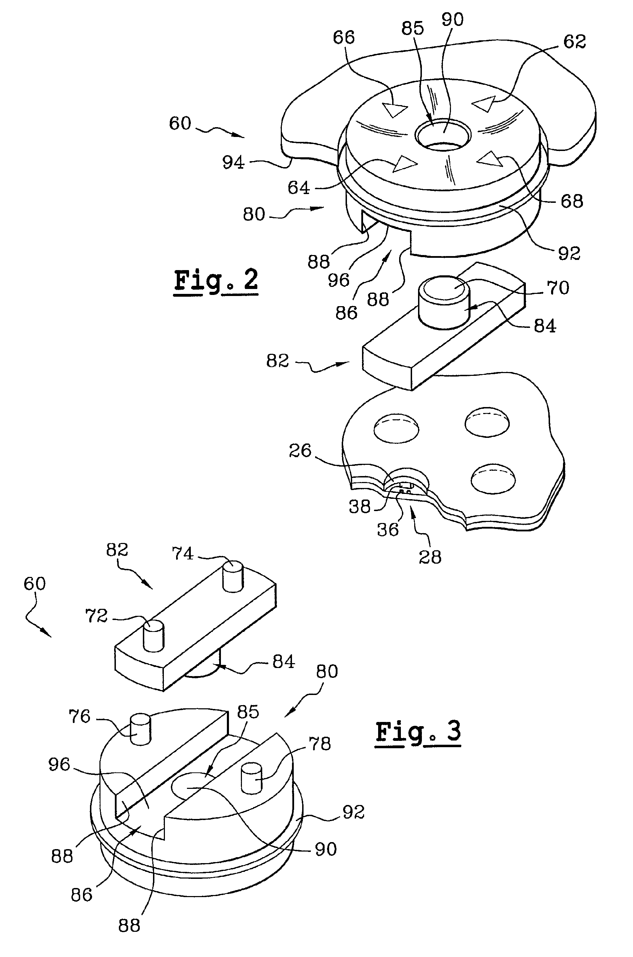

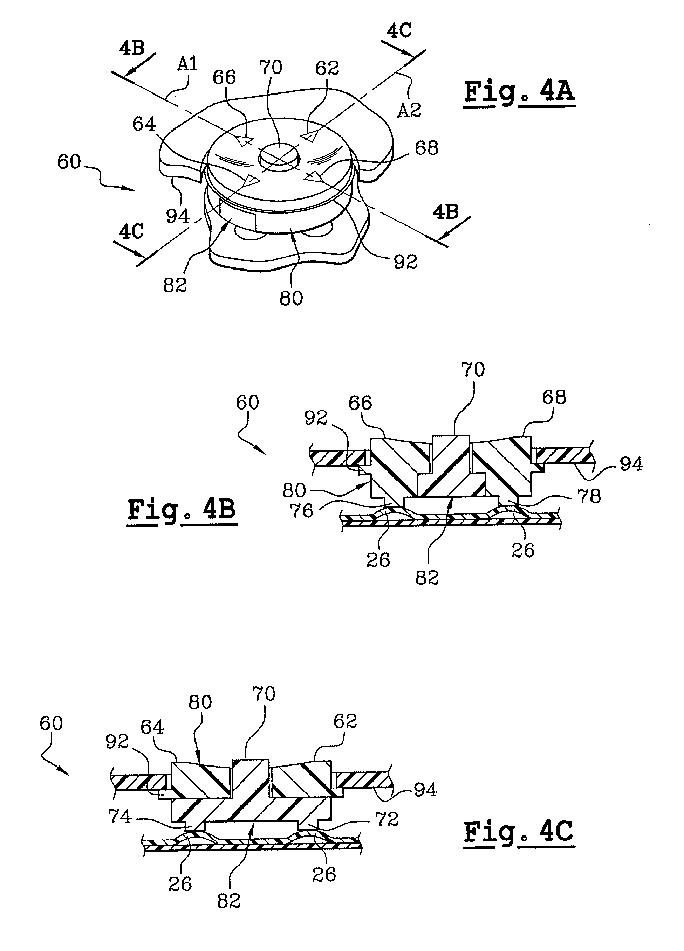

De façon à résoudre le problème décrit précédemment, notamment le manque de fiabilité de fonctionnement d'un tel dispositif de commande, l'invention propose, selon un premier mode de réalisation, que l'organe de commande 60 soit réalisé en deux parties 80 et 82, conformément notamment aux figures 2 à 7.

Afin de faciliter la compréhension de la description et des revendications le dispositif selon l'invention commandera, à titre d'exemple non limitatif, des fonctions de sélection et de validation. Selon des variantes le dispositif peut commander la numérotation, la prise de ligne, etc.

Une première partie supérieure 80 porte les zones latérales de validation 62, 64, 66 et 68 qui sont réparties angulairement à 90° autour de la zone centrale 70 de validation. De plus, la face inférieure de la première partie 80 porte les tronçons inférieurs d'actionnement 76 et 78.

Une deuxième partie inférieure 82 porte les tronçons inférieurs d'actionnement 72 et 74, et comporte un pion central 84 qui traverse verticalement un orifice 85 de la première partie 80. La face supérieure d'extrémité libre constitue la troisième zone centrale de validation 70.

Conformément aux figures, la portion inférieure de la première partie 80 comporte un évidement 86 dont la forme est complémentaire de celle de la deuxième partie 82.

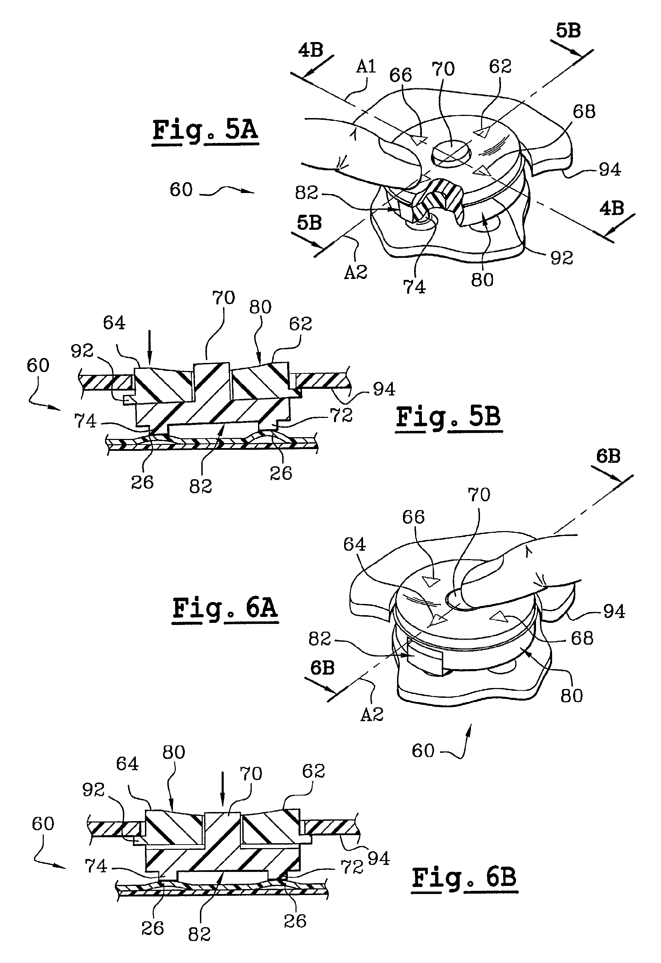

Ainsi, lorsqu'un effort est appliqué sur une zone latérale de validation 62 ou 64, conformément aux figures 5A et 5B, il provoque le basculement selon l'axe A1 de la première partie supérieure 80 qui entraîne la deuxième partie inférieure 82 de façon que le tronçon inférieur d'actionnement 72 ou 74 coopère avec l'organe de déclenchement associé de façon à provoquer le déplacement du curseur vers le haut ou vers le bas du dispositif d'affichage 52 respectivement.

Lorsqu'un effort est appliqué sur la zone centrale 70 de validation de l'organe de commande 60, conformément aux figures 6A et 6B, les deux tronçons inférieurs 72 et 74 sont translatés vers le bas de façon qu'ils coopèrent simultanément avec les deux organes de déclenchement associés de façon à activer la fonction de validation de l'appareil.

De façon à favoriser la coopération simultanée des tronçons d'actionnement 72, 74 avec les organes de déclenchement associés, lorsque la zone centrale 70 est commandée, les parois latérales 88 de l'évidement 86 de la première partie 80 ainsi la paroi annulaire 90 de l'orifice 80 forment des moyens de guidage de la deuxième partie 82 lors de sa translation verticale vers le bas.

Ainsi, le dispositif de commande permet de réaliser cinq fonctions différentes avec seulement quatre commutateurs 28 électriques.

La fiabilité d'un tel système est optimale. En effet, la zone centrale 70 est située à équidistance des tronçons inférieurs 72 et 74 de façon que, lorsqu'un effort est appliqué sur la zone centrale 70, les extrémités libres des deux tronçons inférieurs 72 et 74 restent dans un plan horizontal lors de leur mouvement de descente.

Cela permet ainsi d'éviter tout risque de décalage entre l'instant de coopération des deux tronçons inférieurs 72 et 74 avec les organes de déclenchement associés.

De façon à permettre le retour des deux parties 80 et 82 vers leurs positions de repos, le dispositif de commande 60 comporte des moyens de rappel élastique qui sont ici les organes de déclenchement 26 des commutateurs 28. En effet, les organes de déclenchement 26 ont la forme de dômes élastiques. Ainsi lorsque les dômes sont enfoncés, ils ont tendance à retourner chacun dans sa positon initiale pour retrouver sa forme.

Le retour des parties 80 et 82 est limité vers le haut par des butées supérieures.

Conformément aux figures 2 à 6, la butée supérieure de la première partie 80 est la face inférieure 94 de la paroi du boîtier supérieur 14 contre laquelle une nervure 92, qui s'étend sur sa périphérie annulaire externe, vient en contact en position de repos de la première partie 80.

La deuxième partie 82 est quant à elle en butée vers le haut contre une surface inférieure 96 de la première partie 80 qui correspond ici à la face supérieure de l'évidement 86.

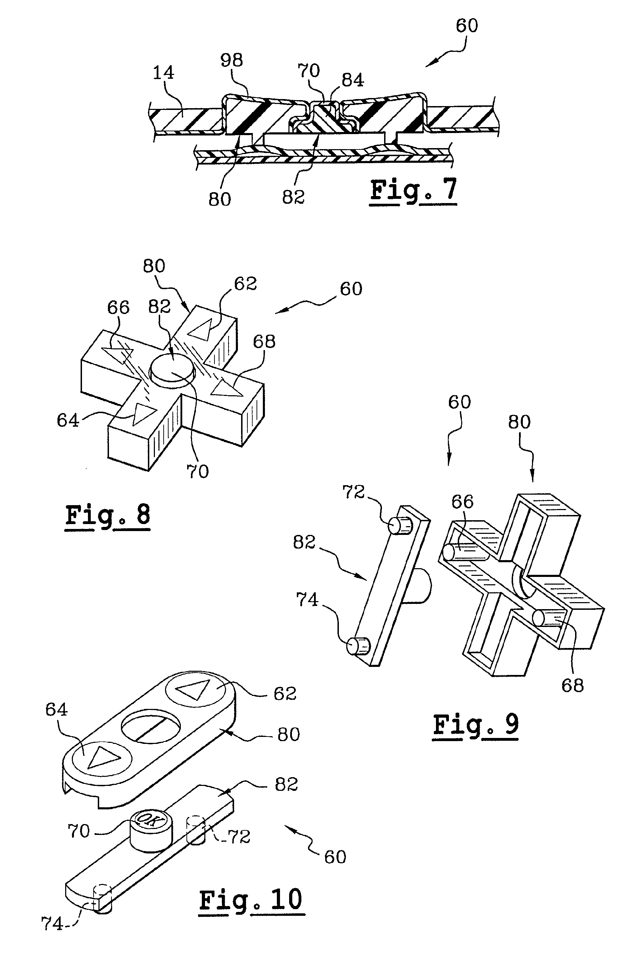

Selon une variante représentée à la figure 7, les première 80 et deuxième 82 parties de l'organe de commande 60 sont réalisées par injection de matière plastique dans des cavités formées dans un film 98 de liaison.

Dans ce cas, la butée supérieure de la première partie 80 est le film 98 lui-même. Avantageusement les cavités destinées à recevoir les autres touches 22 du clavier 24 sont aussi formées dans le film 98.

Le premier mode de réalisation de l'invention décrit précédemment n'est pas limitatif.

Selon un second mode de réalisation représenté aux figures 8 et 9, l'organe de commande 60 a la forme d'une étoile à quatre branches. Chaque branche de l'étoile correspond à la direction de déplacement du curseur sur l'écran 52.

L'extrémité libre de chacune des branches porte la zone latérale de sélection 62 à 68 correspondante permettant le déplacement du curseur selon la direction de la branche.

Le fonctionnement du dispositif de commande selon ce mode de réalisation est similaire à celui du premier mode décrit précédemment.

Selon une variante, le dispositif de commande est multifonctions. Dans ce cas, l'actionnement d'une zone de sélection 62 à 70 peut activer des fonctions différentes selon le mode de fonctionnement de l'appareil 10.

Par exemple, l'organe de commande 60 en forme d'étoile peut constituer une partie du clavier de touches.

Ainsi, lorsque le téléphone 10 fonctionne en mode de "numérotation", l'appui sur une zone de sélection 62 à 68 et sur la zone centrale de validation 70 permet la composition d'un numéro de téléphone.

Lorsque le téléphone fonctionne en mode de "navigation", l'appui sur les zones de sélection latérales 62 à 68 permet de déplacer le curseur sur l'écran et l'appui sur la zone de sélection centrale 70 permet de valider la fonction sélectionnée.

Selon un troisième mode de réalisation du dispositif de commande représenté à la figure 10, la première partie 80 comporte seulement deux zones latérales de sélection, par exemple 62 et 64. La deuxième partie 82 porte quant à elle les deux tronçons inférieurs 72 et 74, ainsi que la zone centrale de validation 70 qui est située de façon similaire au premier mode de réalisation sur la face supérieure d'extrémité libre du pion central 84.

Un tel dispositif de commande permet ainsi le déplacement du curseur sur l'écran selon deux directions opposées, ainsi que la validation de la fonction sélectionnée par l'actionnement de la zone centrale 70.

Ainsi, pour réaliser trois fonctions distinctes, un tel dispositif ne nécessite que deux commutateurs électriques, non représentés sur ces figures. De plus, la conception en deux parties 80, 82 de l'organe de commande 60 permet d'assurer la fiabilité de son fonctionnement, en évitant tout risque de décalage entre l'instant de coopération des deux tronçons inférieurs 62, 64 avec les organes de déclenchement associés.

La description qui précède est réalisée à titre non limitatif. En effet de nombreuses variantes peuvent être envisagées.

Par exemple, la première partie peut porter un nombre de zones latérales et de tronçons inférieurs associés plus élevés. C'est notamment le cas pour un dispositif de commande permettant le pilotage du curseur selon huit directions réparties angulairement à 45°.

La deuxième partie peut aussi porter plus de deux tronçons inférieurs.

## Revendications

1. Dispositif de commande d'un appareil électronique (10) du type qui est constitué d'un organe de commande (60) qui comporte au moins deux zones supérieures latérales (62, 64, 66, 68) opposées de sélection sur lesquelles on peut appliquer un effort de commande et dont chacune est associée à un tronçon inférieur d'actionnement (72, 74, 76, 78) qui est susceptible de coopérer avec un organe (26) de déclenchement associé d'un commutateur (28) électrique, du type dans lequel l'organe de commande (60) est monté basculant autour d'un axe (A1, A2) de sélection qui s'étend selon une direction perpendiculaire à la direction d'alignement des deux commutateurs (28), entre une position intermédiaire de repos et deux positions opposées de sélection, lorsqu'un effort est appliqué sur l'une ou l'autre des zones supérieures de sélection (62, 64, 66, 68), de façon que le tronçon inférieur d'actionnement (72, 74, 76, 78) correspondant coopère avec l'organe de déclenchement (26) associé et active une première ou une deuxième fonction de sélection, et du type dans lequel l'organe de commande (60) est monté mobile en translation selon une direction verticale de validation orthogonale à la direction d'alignement et à l'axe de sélection (A1, A2), entre la position de repos et une position enfoncée, lorsqu'un effort de validation est appliqué sur une troisième zone centrale de validation (70) de l'organe de commande (60), dans laquelle les deux tronçons inférieurs (72, 74, 76, 78) opposés d'actionnement coopèrent simultanément avec les deux organes de déclenchement (26) associés de façon à activer une fonction de validation de l'appareil,
**caractérisé en ce que** l'organe de commande (60) est réalisé en deux parties (80, 82) dont une première partie (80) supérieure porte au moins lesdites deux zones latérales (62, 64, 66, 68) de validation et dont une deuxième partie inférieure (82) porte au moins lesdits deux tronçons inférieurs d'actionnement (72, 74) et comporte un pion central (84) qui traverse verticalement la première partie (80) et dont la face supérieure d'extrémité libre constitue la troisième zone centrale de validation (70).

2. Dispositif de commande selon la revendication précédente, **caractérisé en ce que** la première partie (80) comporte quatre zones latérales de sélection (62, 64, 66, 68) qui sont réparties angulairement à 90° autour de la zone centrale (70) de validation et dont chacune est associée à un tronçon inférieur (72, 74, 76, 78), et **en ce que** les quatre tronçons inférieurs (72, 74, 76, 78) sont portés par la deuxième partie (82), de façon que, lorsqu'un effort de validation est appliqué à la zone centrale (70) de validation, les quatre tronçons inférieurs (72, 74, 76, 78) coopèrent simultanément avec les organes de déclenchement (26) associés pour activer la fonction de validation.

3. Dispositif de commande selon la revendication 1, **caractérisé en ce que** la première partie (80) comporte quatre zones latérales de sélection (62, 64, 66, 68) qui sont réparties angulairement à 90° autour de la zone centrale de validation (70) et dont chacune est associée à un tronçon inférieur (72, 74, 76, 78), et **en ce que** deux tronçons inférieurs (72, 74) opposés sont portés par la deuxième partie (82), les deux autres tronçons inférieurs (76, 78) opposés étant portés par la face inférieure de la première partie, de façon que, lorsqu'un effort de validation est appliqué à la zone centrale de validation (70), les deux tronçons inférieurs (72, 74) portés par la deuxième partie coopèrent simultanément avec les organes de déclenchement (26) associés pour activer la fonction de validation.

4. Dispositif de commande selon l'une quelconque des revendications précédentes, **caractérisé en ce qu'**il comporte des moyens de rappel élastique des deux parties (80, 82) contre des butées supérieures qui définissent leurs positions de repos.

5. Dispositif de commande selon la revendication précédente, **caractérisé en ce que** la butée supérieure de la deuxième partie (82) est une surface inférieure (96) de la première partie (80).

6. Dispositif de commande selon l'une des revendications 4 ou 5, **caractérisé en ce que** les moyens de rappel élastique appartiennent aux commutateurs électriques associés (28).

7. Dispositif de commande selon l'une quelconque des revendications précédentes, **caractérisé en ce qu'**il comporte des moyens de guidage en translation verticale de la deuxième partie de façon à favoriser la coopération simultanée des tronçons d'actionnement (72, 74, 76, 78) qu'elle porte avec les organes de déclenchement associés (26), lorsque la zone centrale (70) est commandée.

8. Appareil électronique qui comporte un organe de commande (60) selon l'une quelconque des revendications précédentes, **caractérisé en ce qu'**il consiste en un téléphone mobile de type GSM.
